**Europäisches Patentamt**

**European Patent Office**

**Office européen des brevets**

(19)

(11) Veröffentlichungsnummer: **0 003 499**
**B1**

(12) **EUROPÄISCHE PATENTSCHRIFT**

(45) Veröffentlichungstag der Patentschrift: **15.07.81**

(21) Anmeldenummer: **79100046.6**

(22) Anmeldetag: **09.01.79**

(51) Int. Cl.³: **C 08 G  73/02, D 21 H  3/48**

(54) Verfahren zur Herstellung von wasserlöslichen Kondensationsprodukten, ihre Verwendung bei der Papierherstellung sowie Hilfsmittel enthaltend diese Kondensationsprodukte.

(30) Priorität: **20.01.78 DE 2802487**

(43) Veröffentlichungstag der Anmeldung:
**22.08.79 Patentblatt 79/17**

(45) Bekanntmachung des Hinweises auf die Patenterteilung:
**15.07.81 Patentblatt 81/28**

(84) Benannte Vertragsstaaten:
**BE CH DE FR GB IT**

(56) Entgegenhaltungen:
**keine**

(73) Patentinhaber: **BAYER AG**
**Zentralbereich Patente, Marken und Lizenzen**
**D-5090 Leverkusen 1, Bayerwerk (DE)**

(72) Erfinder: **Löbach, Wilfried, Dr.**
**Flutgraben 17**
**D-5300 Bonn 3 (DE)**
Erfinder: **Lehmann, Wolfgang, Dr.**
**Carl-Rumpff-Strasse 7**
**D-5090 Leverkusen (DE)**
Erfinder: **Müller, Friedhelm, Dr.**
**Zum Hahnenberg 62**
**D-5068 Odenthal (DE)**

Courier Press, Leamington Spa, England.

# 0 003 499

Verfahren zur Herstellung von wasserlöslichen Kondensationsprodukten, ihre Verwendung bei der Papierherstellung sowie Hilfsmittel enthaltend diese Kondensationsprodukte

Gegenstand der Erfindung ist ein Verfahren zur Herstellung von nicht selbstvernetzenden, wasserlöslichen Kondensationsprodukten aus mehrwertigen Aminen und Alkylen-dihalogeniden, die Verwendung der so hergestellten Kondensationsprodukte bei der Papierherstellung sowie Hilfsmittel, die diese Kondensationsprokukte enthalten.

Die Kondensationsprodukte sind dadurch gekennzeichnet, daß sie in wäßrigem Medium bei Temperaturen von 0 bis 120°C und pH-Werten oberhalb von 6 in Gegenwart von Emulgatoren hergestellt werden.

Die bisher bekannten Kondensationsprodukte aus mehrwertigen Aminen und gegenüber Aminogruppen polyfunktionellen Verbindungen, die bei der Papierherstellung Verwendung finden, werden in Abwesenheit von Emulgatoren hergestellt.

Es wurde nun überraschenderweise gefunden, daß die bekannten Umsetzungen durch Zusatz von Emulgatoren nicht nur beschleunigt werden, sondern daß sie darüber hinaus auch zu wirkungsvolleren Entwässerungsbeschleunigungsmitteln und Retentionsmitteln führen.

Als bekannte Verfahren, die für die erfindungsgemäße Mitverwendung von Emulgatoren in Frage kommen, seien u.a. genannt:

Die Umsetzung von Polyalkylenpolyaminen mit Dihalogenethan und -propan in wäßrigem Medium (GB—PS 775 721);

die Umsetzung von α- und β-Halogenfettsäureestern allein oder in Kombination mit epoxidgruppenhaltigen bifunktionellen Verbindungen bzw. α, β-ungesättigten Carbonsäureestern und Polyalkylenpolyaminen (DE—PS 1 006 155);

die Umsetzung von Polyalkylenpolyaminen mit Epihalogenhydrinen bzw. Dihalogenhydrinen in wäßrigem Medium (US—PS 2 969 302);

die Umsetzung von Polyamidaminen aus Polyalkylenpolyaminen und Dicarbonsäuren mit bifunktionellen Verbindungen, insbesondere Epichlorhydrin und 1,2-Dichlorethan in wäßrigem Medium (GB—PS 1 035 296);

die Umsetzung von Polyamidaminen aus Polyalkylenpolyaminen, Aminocarbonsäuren bzw. deren Lactamen und Dicarbonsäuren mit bifunktionellen Verbindungen, vor allem Dichlorethan oder Epichlorhydrin, in wäßrigem Medium (DE—PS 1771 814);

die Umsetzung von Polyethylenpolyaminen mit 1,2-Dichlorethan zu hochviskosen wäßrigen Lösungen (900 mPas bei 25°C) und nachfolgendem thermischen Viskositätsabbau auf 300 bis 600 mPas bei 25°C (DE—PS 2 351 745);

die Umsetzung von Gemischen aus Polyamidaminen und einem oder mehreren Polyalkylenpolyaminen mit polyfunktionellen Verbindungen, vor allem 1,2-Dichlorethan und Epichlorhydrin;

die Umsetzung von amidgruppenhaltigen, mehrwertigen Aminen, hergestellt aus 1,4 bis 3 Mol Polyalkylenpolyamin und 1 Mol Dicarbonsäuren, mit polyfunktionellen Verbindungen, insbesondere 1,2-Dichlorethan.

Beispiele für die als Ausgangsprodukte verwendbaren mehrwertigen Amine sind in den vorstehend genannten Patentschriften in großer Zahl beschrieben.

Als gegenüber Aminogruppen polyfunktionelle Verbindungen kommen in Wasser wenig lösliche Alkylendihalogenide in betracht: z.B. 1,2-Dichlorethan, 1,2-Dibromethan, 1,2-Dichlorpropan, 1,3-Dichlorpropan, 1,6-Dichlorhexan.

Die Einsatzmenge an Emulgator beträgt zwischen 1 und 0,00025%, bezogen auf das Gewicht einer 22,5 %igen Lösung. Besonders geeignet sind Mengen von 0,08 bis 0,01%.

Für jede Polyamidamin- oder Polyalkylenpolyamin-Umsetzung mit polyfunktionellen Verbindungen gibt es einen optimal wirkenden Emulgator. Durch Vorversuche läßt sich leicht der am besten geeignete Emulgator finden.

Bevorzugt werden nichtionogene Emulgatoren verwendet. Diese werden beispielsweise in "K. Lindner Tenside, Textilhilfsmittel, Waschrohstoffe" Band I (1964), S. 841—920, beschrieben.

Von diesen Emulgatoren seien beispielsweise genannt:

a. oxalkylierte Produkte wie

Additionsprodukte von 3—30 Mol Ethylenoxid an 1 Mol p-Nonylphenol,

Additionsprodukte von 15—40 Mol Ethylenoxid an 1 Mol Oleylalkohol oder Cocosalkohol,

Additionsprodukte von 10—30 Mol Ethylenoxid an 1 Mol Olsäure, Ricinolsäure oder Cocofettsäure,

Additionsprodukte von 15—40 Mol Ethylenoxid an 1 Mol Rizinusöl,

Additionsprodukte von 20—50 Mol Ethylenoxid an 1 Mol Abietinsäure,

Additionsprodukte von 10—15 Mol Ethylenoxid an p-Oxidiphenyl oder dessen Alkyl- und/oder Aralkylderivate,

Additionsprodukte von 3—30 Mol Ethylenoxid an die Kondensationsprodukte aus Alkylphenolen, sekundären Aminen und Alkylenoxiden,

Additionsprodukte von 3—30 Mol Ethylenoxid an Stearylamin,

Additionsprodukte von 30—40 Mol Ethylenoxid an p-Nonylphenol, Oleylalkohol oder Cocosalkohol, deren OH-Gruppe mit Acrylnitril blockiert ist,

2

b.  nicht oxalkylierte Produkte wie Säureamide von Monoethanolamin oder Diethanolamin und Fettsäuren wie Palmitinsäure, Stearinsäure, Kokosfettsäure und Ölsäure,
Säureamide von Isopropanolamin und Fettsäuren wie Laurinsäure, Myristinsäure, Kokosfettsäure, Palmitinsäure und Stearinsäure.

Bei der Verwendung aller Emulgatoren ergibt sich eine Verkürzung der Reaktionszeit. Diese kann im Einzelfall bis zu 50% betragen. Ein weiterer Vorteil dieses Verfahrens zeigt sich überraschenderweise bei der Verwendung der erfindungsgemäß hergestellten Kondensationsprodukte dadurch, daß sie zu Retentions- und Entwässerungsbeschleunigungsmitteln führen, die sowohl im basichen als auch im sauren Bereich eine bessere Wirkung zeigen als die nach dem Stand der Technik hergestellten.

Die Kondensation wird insbesondere bei einer Gesamtkonzentration an mehrwertigen Aminen von 10 bis 60% durchgeführt.

Bevorzugt werden pro Mol Stickstoffatom in dem mehrwertigen Amin 0,1 bis 0,5 Mol der polyfunktionellen Verbindung eingesetzt.

Die Temperaturen liegen bei 0—120°C, insbesondere bei 60—90°C.

Der pH-Wert liegt oberhalb von 6, insbesondere bei 8—11.

### Beispiele

Ia) Ein stickstoffhaltiges Umsetzungsprodukt wurde nach DE—PS 1 771 814, Einwirkungsprodukt 1a und b wie folgt hergestellt:

(1) In einem Reaktionsgefäß mit Gaseinleitungsrohr und absteigendem Kühler werden 108 g (1,05 Mol) Diethylentriamin mit 146 g (1 Mol) Adipinsäure und 57 g (0,5 Mol) $\varepsilon$-Caprolactam unter Zusatz von 7 g (0,04 Mol) Adipinsäurehydrazid vermischt. Das Gemisch wird unter Rühren und Überleiten von sauerstofffreiem Stickstoff innerhalb von 3,5 Stunden auf 190°C erhitzt, wobei die Reaktionstemperatur im Bereich von 150 bis 190°C in der Weise erhöht wird, daß das entstehende Wasser gleichmäßig abdestilliert. Nachdem etwa 35 g Wasser und geringe Mengen Diethylentriamin überdestilliert sind, wird das Reaktionsgemisch noch so lange bei 190 bis 180°C unter vermindertem Druck (20 bis 50 mm Hg) gerührt, bis insgesamt 50 g Destillat angefallen sind, dann auf 130°C abgekühlt und mit der gleichen Gewichtsmenge (270 g) Wasser versetzt. Die so erhaltene 50 %ige wäßrige Lösung des basischen Polyamids weist eine Viskosität von 466 cP bei 25°C und ein Äquivalentgewicht von etwa 420 auf.

(2) Ein Gemisch aus 420 g (1 Val) dieser 50%igen Polyamidlösung, 428 g Wasser und 16,8 g (0,17 Mol) 1,2-Dichlorethan wird in einem Reaktionsgefäß 7 Stunden auf 80°C erwärmt. Hierauf wird die Lösung mit 150 g Wasser und 60 g konzentrierter Salzsäure versetzt und abgekühlt. Die so erhaltene 20%ige wäßrige Lösung des gebildeten Einwirkungsproduktes besitzt einen pH-Wert von 4,5 und eine Viskosität von 250 mPas bei 25°C.

Ib) Herstellung wie Ia, jedoch bei der Einwirkung des Dichlorethans noch zusätzlich unter Einsatz von 0,2 g eines Emulgators, bestehend aus einem Polyether aus Laurylalkohol und 7 Mol Ethylenoxid. Die Viskosität betrug 280 mPas bei 25°C und die Reaktionszeit 5,5 Stunden.

Ic) Herstellung wie Ia, jedoch bei der Einwirkung des Dichlorethans noch zusätzlich unter Einsatz von 0,2 g eines Emulgators, bestehend aus einem Polyether aus Oleylalkohol und 19 Mol Ethylenoxid. Die Viskosität betrug 270 mPas bei 25°C und die Reaktionszeit 6 Stunden.

Id) Herstellung wie Ia, jedoch bei der Einwirkung des Dichlorethans noch zusätzlich unter Einsatz von 0,2 g eines Emulgators, bestehend aus einem Polyester aus Ricinusöl und Ethylenoxid. Die Viskosität betrug 300 mPas bei 25°C und die Reaktionszeit 5 Stunden.

IIa) Herstellung eines Umsetzungsproduktes (1) aus einem Polyamidamin (2), einem Polyalkylenpolyamin (3) und 1,2-Dichlorethan.

(1) Bei einer Temperatur von 87—93°C wird der Mischung aus 81,6 g der unter 2) beschriebenen 50%igen Polyamidaminlösung und 72 g des unter 3) erwähnten Polyethylenpolyamingemisches mit einem Wassergehalt von 17% und einem Amin-Val von 48,6 und 150 g Wasser unter sehr gutem Rühren so schnell 52 g 1,2-Dichlorethan zugesetzt, daß unter leichtem Sieden des 1,2-Dichlorethans der Temperaturbereich von 87—93°C gehalten werden kann (Dauer ca. 6 Stunden). Während der Zugabe des 1,2-Dichlorethans werden außerdem noch 50 g 50%ige Natronlauge zugesetzt und zwar in einer Geschwindigkeit, daß ihr Zusatz etwa mit 5 ml Verzögerung dem des 1,2-Dichlorethans, ebenso auf ml bezogen, folgt, Zunächst wächst die Viskosität nur sehr langsam, in der letzten Phase schneller an. Die Polykondensation wird zu dem Zeitpunkt durch Zusatz von Säure abgebrochen, in dem die Viskosität so hoch ist, daß sich nach Fertigstellung des Polyamins eine Viskosität von 350—500 mPas als 22,5%ige Lösung ergibt. (Nach Reaktionsbeginn ungefähr 7 Stunden). Zunächst werden unter Kühlung 75 g konzentrierte Salzsäure/$H_2O$ 2:1 schnell zugesetzt und danach noch so viel konzentrierte Salzsäure, daß ein pH-Wert von 4,0 erreicht wird—etwa 21 g. Während des Abkühlens wird noch 1—2 Stunden unter vermindertem Druck (50 Torr) gerührt, um nicht umgesetztes 1,2-Dichlorethan zu entfernen. Zuletzt wird noch so viel Wasser zugesetzt, daß eine 22,5%ige Lösung des Polyamins erhalten wird.

(2) In einem Reaktionsgefäß mit Gaseinleitungsrohr und absteigendem Kühler werden 108 g (1,05 Mol) Diethylentriamin mit 146 g (1 Mol) Adipinsäure unter Zusatz von 9 g (0,05 Mol) Adipinsäuredihydrazid vermischt, und das Gemisch wird unter Rühren und Überleiten von sauerstofffreiem

**0 003 499**

Stickstoff innerhalb von 3—4 Stunden auf 190°C erhitzt, wobei die Reaktionstemperatur im Bereich von 150—190°C in dem Maße erhöht wird, daß das entstehende Wasser gleichmäßig abdestilliert. Nachdem etwa 30 g Wasser und geringe Mengen Diethylentriamin überdestilliert sind, wird das Reaktionsgemisch noch so lange bei 190—180°C unter vermindertem Druck (20 bis 50 mm/Hg) gerührt, bis insgesamt 44 g Destillat angefallen sind, dann auf 130°C abgekühlt und mit der gleichen Gewichtsmenge (219 g) Wasser versetzt. Das gebildete basische Polyamid wird so in Form einer 50% wäßrigen Lösung erhalten, die eine Viskosität von 300—400 mPas bei 25°C und ein Äquivalentgewicht von 340 besitzt.

(3) Aus dem durch kontinuierliche Umsetzung von Dichlorethan, wäßrigem Ammoniak und Ethylendiamin im Molverhältnis von 1:17:0,4 bei 160—220°C und 100 bar erhaltenem Reaktionsgemisch wird unter Druck zunächst das überschüssige Ammoniak abgetrennt und dann bei 130—135°C mit überschüssiger 50%iger Natronlauge die entstandenen Basen aus ihren Hydrochloriden in Freiheit gesetzt. Dabei destilliert der größte Teil des Wassers und des Ethylendiamins ab, während sich die höhersiedenden Basen flüssig abscheiden. Das so erhaltene Basengemisch enthält neben 15—20% Wasser und 3—5% Ethylendiamin, etwa 15—20% Diethylentriamin, 2—3% Aminoethylpiperazin, 1% $NH_2$—$CH_2CH_2$—$NHCH_2CH_2$—OH, 15—18% Triethylentetramin, 3—4% Tetraethylentetramin, 10—14% Tetraethylenpentamin, 6—10% Pentaethylenhexamin, sowie rund 10—15% höher Polyethylenpolyamine und geringe Mengen an Kochsalz und Natriumhydroxid.

IIb) Herstellung wie IIa, jedoch noch zusätzlich unter Einsatz von 0,4 g eines Emulgators, bestehend aus einem Polyether aus Laurylalkohol und 7 Mol Ethylenoxid. Die Viskosität betrug 250 mPas bei 25°C und die Reaktionszeit 4,5 Stunden.

IIc) Herstellung wie IIa, jedoch noch zusätzlich unter Einsatz von 0,4 g eines Emulgators, bestehend aus einem Polyether aus Oleylalkohol und 19 Mol Ethylenoxid. Die Viskosität betrug 290 mPas bei 25°C und die Reaktionszeit 4,5 Stunden.

IIIa) Herstellung eines Umsetzungsproduktes (1) aus einem Polyamidamin (2) und 1,2-Dichlorethan.

(1) 15,5 g 1,2-Dichlorethan werden unter sehr gutem Rühren und bei einer Temperatur von 87—93°C der Mischung aus 80 g 50%iger wäßriger Lösung des unter (2) beschriebenen Amides und 60 g Wasser in der Geschwindigkeit zugesetzt, daß unter leichtem Sieden der Temperaturbereich gehalten werden kann—bei diesem Ansatz innerhalb zwei Stunden. Anschließend wird bei der gleichen Temperatur noch so lange erhitzt, bis die Viskosität auf etwa 30—50 mPas angestiegen ist. Daraufhin wird auf ca. 75°C abgekühlt, um in letzter Phase eine zu rasche Viskositätssteigerung zu verhindern. Bei dieser erniedrigtem Temperatur wird dann noch so lange kondensiert, bis die Viskosität so hoch ist, daß sich nach Fertigstellung des Produktes eine Viskosität von 350—600 mPas/22,5%ig/25°C ergibt. Um dies zu erreichen, wird in dem etwa gleichhohen Viskositätsbereich, jedoch bei 75°C, die Kondensation beendet, und zwar durch Abkühlen, gleichzeitige schnelle Zugabe eines Gemisches von 15 g konz. Salzsäure und 20 g Wasser und durch anschließenden Zusatz von noch so viel konz. Salzsäure, daß sich ein pH-Wert von 5,0 einstellt, wozu noch etwa 11 g nötig sind. Während des Abkühlens wird dann noch 1—2 Stunden unter Vermidertem Druck (50 Torr) gerührt, un nicht umgesetztes 1,2-Dichlorethan (etwa 0,5 g) restlos zu entfernen. Am Ende wird dann noch mit Wasser auf 195, 1 g zur 22,5%igen Lösung des Umsetzungsproduktes (als freie Base, also ohne Chlorhydrat berechnet) aufgefüllt.

Nach einer Reaktionszeit von 13 Stunden betrug die Viskosität bei 25°C 420 mPas.

(2) In einem 2-Liter-Dreihalskolben werden 461 g des unter (3) beschriebenen Polyethylenpolyamins mit einem Amin-Val von 43,7 und einem mittleren Molekulargewicht von 205 (2,25 Mol) vorgelegt. Unter Rühren werden dann 146 g Adipinsäure (1 Mol) so schnell zugegeben, daß die Innentemperatur infolge Neutralisationswärme auf 125—135°C ansteigt. Die klare Schmelze des Salzes wird darauf unter Überleiten eines schwachen Stickstoffstromes innerhalb von 3 Stunden auf 195 bis 200°C erhitzt und behält diese Temperatur noch 3 Stunden bei. Die Polykondensation ist dabei unter Übergang von 46,4 g Wasser (10,4 g mehr als für die reine Polyamidbildung berechnet—weist auf zusätzliche Bildung von Imidazolinringen aus der Polyamidgruppe und einer benachbarten sek. Aminogruppe hin) und 0,6 g niedrigsiedender Polyethylenpolyamine (evtl. Diethylentriamin) beendet. Das Umsetzungsprodukt wird dann auf etwa 130 bis 140°C abgekühlt und bei dieser Temperatur werden 560 g Wasser schnell zugesetzt. Es bildet sich dabei eine klare, gelbe 50%ige wäßrige Lösung des Polyamids.

Das wasserfreie amidgruppenhaltige mehrwertige Amin hat bei 150°C eine Viskosität von 25 mPas.

(3) Zunächst wird wie unter IIa (3) verfahren. Aus dem so erhaltenen Basengemisch wird zunächst unter Normaldruck, dann unter vermindertem Druck von etwa 100 mbar das restliche Wasser, Ethylendiamin sowie der Größte Teil des Diethylentriamins abdestilliert und das sich abscheidende Kochsalz durch Filtration entfernt.

IIIb) Herstellung wie IIIa, jedoch noch zusätzlich unter Einsatz von 0,3 g eines Emulgators, bestehend aus einem Polyether aus Oleylalkohol und 10 Mol Ethylenoxid. Die Viskosität betrug 350 mPas bei 25°C und die Reaktionszeit 10 Stunden.

IIIc) Herstellung wie IIIa, jedoch noch zusätzlich unter Einsatz von 0,3 g eines Emulgators, be-

4

stehend aus einem Polyester aus Ricinusöl und Ethylenoxid. Die Viskosität betrug 400 mPas bei 25°C und die Reaktionszeit 7,5 Stunden.

Anwendungsbeispiel 1

Als Maß für die auf einer Papiermaschine der Praxis zu erwartende Entwässerungsbeschleunigung wurde der Mahlgrad nach Schopper-Riegler bestimmt. Je stärker der Mahlgrad durch das zugesetzte Retentionsmittel erniedrigt wird, umso besser ist die zu erwartende Entwässerungsbeschleunigung.

Ein weiteres Maß für die auf einer Papiermaschine zu erwartende Entwässerungsbeschleunigung ist die sogenannte Entwässerrungszeit. Diese wird bestimmt, indem im Mahlgradprüfer nach Schopper-Riegler die Zeit gemessen wird, welche zur Einstellung eines bestimmten Mahlgrades, bzw. Wasservolumens im Auslaufbecher erforderlicht ist. Je kürzer diese Zeit ist, umso besser ist die erzielbare Entwässerrungsbeschleunigung.

Gemischtes Altpapier wurde am Schnellrührer aufgeschlagen und der pH-Wert eingestellt:
a) Saurer Bereich:
   Zusatz von 0,5% Aluminiumsulfat, Einstellung von pH 4,5 mit Schwefelsäure.
b) Neutraler Bereich:
   Einstellung von pH 7,2 mit Natronlauge.

Zu 200 ml der nach a) oder b) vorbereiteten 1%igen Papierstoff-Suspension wurde jeweils die 1%ige Lösung mit Wasser auf 1000 ml aufgefüllt und mit Hilfe des Schopper-Riegler-Gerätes der Mahlgrad bestimmt.

Die Zusatzmengen beziehen sich jeweils auf das Gewicht des lufttrockenen Papierstoffes sowie auf die 22,5%ige Lösung der Polyamine.

Die folgenden Tabellen 1—3 veranschaulichen, daß die nach dem erfindungsgemäßen Verfahren, also mit Emulgatoren hergestellten Polyamine Ib—d, IIb und c und IIIb und c im sauren wie im neutralen Gebiet eine bessere Wirksamkeit als Entwässerungsbeschleunigungsmittel aufweisen als die ohne Anwesenheit von Emulgatoren gebildeten Polyamine Ia, IIa und IIIa. Neben dem Mahlgrad ist in den Tabellen die Entwässerungszeit in Sek. aufgeführt, die bis zum Erreichen eines bestimmten Mahlgrades notwendig war. Dieser Mahlgrad sollte wenig unter dem Mahlgrad des Papierbreis ohne Zusatz eines Retentionsmittels liegen.

Tabelle 1

| Beispiel | Zusatz in % | Altpapier Mahlgrad [°SR] | pH 7,2 Sec bei 49 [°SR] | Zusatz in % | Altpapier Mahlgrad [°SR] | + 0,5% Alaun pH 4,5 + $H_2SO_4$ Sec bei 46 [°SR] |
|---|---|---|---|---|---|---|
| ohne Retentionsmittel | | 53 | | | 48 | |
| Ia | 0,2 | 48 | 53,5 | 0,1 | 44 | 45,2 |
| | 0,4 | 45 | 40,4 | 0,3 | 40 | 33,4 |
| Ib | 0,2 | 47 | 47,0 | 0,1 | 43 | 42,2 |
| | 0,4 | 44 | 36,5 | 0,3 | 38 | 29,0 |
| Ic | 0,2 | 47 | 49,5 | 0,1 | 43 | 43,3 |
| | 0,4 | 43 | 36,7 | 0,3 | 39 | 31,3 |
| Id | 0,2 | 47 | 45,3 | 0,1 | 43 | 39,5 |
| | 0,4 | 44 | 36,4 | 0,3 | 38 | 29,8 |

**0 003 499**

Tabelle 2

| Beispiel | Zusatz in % | Altpapier Mahlgrad [°SR] | pH 7,5 Sec bei 53 [°SR] | Zusatz in % | Altpapier Mahlgrad [°SR] | + 0,5% Alaun pH 4,5 + $H_2SO_4$ Sec bei 53 [°SR] |
|---|---|---|---|---|---|---|
| ohne Retentionsmittel | | 54 | | | 54 | |
| IIa | 0,3 | 50 | 35,5 | 0,1 | 50 | 35,3 |
| | 0,6 | 42 | 22,1 | 0,3 | 49 | 30,2 |
| IIb | 0,3 | 49 | 31,2 | 0,1 | 49 | 32,5 |
| | 0,6 | 40 | 18,4 | 0,3 | 47 | 28,5 |
| IIc | 0,3 | 48 | 31,3 | 0,1 | 48 | 31,5 |
| | 0,6 | 41 | 19,8 | 0,3 | 47 | 27,6 |

Tabelle 3

| Beispiel | Zusatz in % | Altpapier Mahlgrad [°SR] | pH 7,3 Sec bei 53 [°SR] | Zusatz in % | Altpapier Mahlgrad [°SR] | + 0,5% Alaun pH 4,5 + $H_2SO_4$ Sec bei 49 [°SR] |
|---|---|---|---|---|---|---|
| ohne Retentionsmittel | | 50 | | | 49 | |
| IIIa | 0,2 | 46 | 38,1 | 0,1 | 45 | 38,7 |
| | 0,4 | 38 | 22,1 | 0,3 | 41 | 28,4 |
| IIIb | 0,2 | 45 | 37,0 | 0,1 | 44 | 36,1 |
| | 0,4 | 36 | 20,6 | 0,3 | 41 | 27,5 |
| IIIc | 0,2 | 44 | 36,4 | 0,1 | 43 | 36,7 |
| | 0,4 | 35 | 20,9 | 0,3 | 40 | 26,2 |

**Patentansprüche**

1. Verfahren zur Herstellung von wasserlöslichen, nicht selbstvernetzenden Kondensationsprodukten durch Umsetzung von Polyaminen und/oder Polyamidaminen mit Alkylendihalogeniden, in wäßrigem Medium bei Temperaturen von 0 bis 120°C und pH-Werten oberhalb von 6, dadurch gekennzeichnet, daß die Umsetzung bei einer Gesamtkonzentration an Polyaminen und/oder Polyamidaminen von 10 bis 60% und in Anwesenheit von zwischen 1 und 0,00025% eines Emulgators, bezogen auf das Gewicht einer 22,5%igen Lösung der Kondensationsprodukte, durchgeführt wird.

2. Verfahren nach Anspruch 1, dadurch gekennzeichnet, daß als Polyamine Polyalkylenpolyamine eingesetzt werden.

3. Verfahren nach Anspruch 1, dadurch gekennzeichnet, daß amidgruppehaltige Amine eingesetzt werden.

4. Verfahren nach Anspruch 1, dadurch gekennzeichnet, daß Gemische aus Polyalkylenpolyaminen und amidgruppenhaltigen Aminen eingesetzt werden.

5. Verfahren nach Anspruch 1, dadurch gekennzeichnet, daß als Emulgator ein nichtionogener Emulgator eingesetzt wird.

6. Verwendung der nach Anspruch 1 hergestellten wasserlöslichen, nicht selbstvernetzenden Kondensationsprodukte, als Hilfsmittel zur Erhöhung der Retention von Fasern, Füllstoffen und Pigmenten sowie als Entwässerungsbeschleunigungsmittel bei der Papierherstellung und zur Aufarbeitung von Papiermaschinenabwässern durch Filtration, Sedimentation und Flotation.

7. Nach Anspruch 1 hergestellte wasserlösliche, nicht selbstvernetzende Kondensationsprodukte enthaltende Hilfsmittel zur Erhöhung der Retention von Fasern, Füllstoffen und Pigmenten sowie Entwässerungsbeschleunigungsmittel bei der Papierherstellung und zur Aufarbeitung von Papiermaschinenabwässern durch Filtration, Sedimentation und Flotation.

**Revendications**

1. Procédé de fabrication de produits de condensation solubles dans l'eau et non autoréticulants,

6

**0 003 499**

par réaction de polyamines et/ou polyamides-amines avec des dihalogénures d'alcoylène, en milieu aqueux à des températures de 0 à 120°C et à des valeurs de pH supérieures à 6, caractérisé en ce que la réaction est exécutée à une concentration globale de polyamines et/ou polyamides-amines de 10 à 60% et en présence de entre 1 et 0,00025% d'un émulsifiant par rapport au poids d'une solution à 22,5% des produits de condensation.

2. Procédé selon de revendication 1, caractérisé en ce qu'on utilise comme polyamines des polyalcoylène polyamines.

3. Procédé selon de revendication 1, caractérisé en ce qu'on utilise des amines contenant des groupes amide.

4. Procédé selon de revendication 1, caractérisé en ce qu'on utilise des mélanges de polyalcoylène polyamines et d'amines contenant des groupes amide.

5. Procédé selon de revendication 1, caractérisé en ce qu'on utilise comme émulsifiant un émulsifiant non ionogène.

6. Utilisation des produits de condensation solubles dans l'eau et non autoréticulants préparés selon la revendication 1 comme agents auxiliaires pour augmenter la rétention des fibres, des matières des charge et des pigments, de même qu'en tant qu'agents accélérateurs de déshydratation dans la fabrication du papier et pour le traitement des eaux résiduaires de machines à papier par filtration, sédimentation et flotation.

7. Agents auxiliaires contenant des produits de condensation solubles dans l'eau et non autoréticulants préparés selon la revendication 1, pour augmenter la rétention des fibres, des matières de charge et des pigments, de même qu'agents accélérateurs de déshydratation dans la fabrication du papier et pour le traitement des eaux résiduaires de machines à papier par filtration, sédimentation et flotation.

## Claims

1. Process for the preparation of water-soluble condensation products, which are not self-crosslinking, by reacting polyamines and/or polyamideamines with alkylene dihalides, in an aqueous medium at temperatures from 0 to 120°C and pH values above 6, characterized in that the reaction is carried out with a total concentration of polyamines and/or polyamideamines of 10 to 60% and in the presence of between 1 and 0.00025% of an emulsifier, based on the weight of a 22.5% solution of the condensation products.

2. Process according to claim 1, characterised in that polyalkylene polyamines are used as the polyamines.

3. Process according to claim 1, characterised in that amines containing amide groups are used.

4. Process according to claim 1, characterised in that mixtures of polyalkylene polyamines and amines containing amide groups are used.

5. Process according to claim 1, characterised in that a non-ionic emulsifier is used as the emulsifier.

6. Use of the water-soluble condensation products, which are non self-crosslinking, prepared according to claim 1, as auxiliaries for increasing the retention of fibres, fillers and pigments and as drainage accelerators for the production of paper and for working up effluents from paper machines by filtration, sedimentation and flotation.

7. Auxiliaries containing water-soluble condensation products, which are not self-crosslinking, prepared according to claim 1, for increasing the retention of fibres, fillers and pigments and drainage accelerators for the production of paper and for working up effluents from paper machines by filtration, sedimentation and flotation.